# DEMANDE DE BREVET EUROPEEN

(11) **EP 2 110 536 A1**
(43) Date de publication de la demande: **21.10.2009**
(21) Numéro de dépôt: 09152219.3
(22) Date de dépôt: 05.02.2009
(51) Int. Cl.: F02F 1/24, F02F 1/36, F01N 7/10

(54) **Architecture de collecteur d'échappement intégré à la culasse d'un moteur de véhicule automobile**

(30) Priorité: 15.02.2008 FR 0850980
(71) Demandeur: PEUGEOT CITROËN AUTOMOBILES S.A., 78140 Velizy Villacoublay (FR)
(72) Inventeur: Chartie, Vincent, 75011, Paris (FR); Messe, Sébastien, 92370, Chaville (FR)
(74) Mandataire: Ménès, Catherine

(57) **Abrégé**

Architecture de collecteur (20) de gaz d'échappement intégré à une culasse (10) de moteur (1) de véhicule automobile, ledit collecteur intégré (20) comprenant un noyau (21) de circulation de liquide de refroidissement alimenté par un circuit (11, 12) de refroidissement de la culasse (10) ou du carter cylindre.

Selon l'invention, ledit collecteur intégré (20) comprend un actionneur (24) apte à commander l'écoulement du liquide de refroidissement dans ledit noyau (21) de circulation.

Application à la diminution de la pollution des moteurs de véhicules automobiles en phase de démarrage à froid.

## Description

La présente invention concerne une architecture de collecteur de gaz d'échappement intégré à une culasse de moteur de véhicule automobile.

L'invention trouve une application particulièrement avantageuse dans le domaine de la diminution de la pollution des moteurs de véhicules automobiles, à essence ou diesel, notamment en phase de démarrage à froid des véhicules.

Il existe aujourd'hui divers systèmes qui utilisent les propriétés thermiques des gaz d'échappement émis par les moteurs de véhicules automobiles pour piloter certaines phases de fonctionnement du moteur, appelées aussi situations de vie, en fonction des applications recherchées.

Le brevet américain n° 4,805,403 donne un exemple d'un tel système pour lequel le résultat recherché est une amélioration du démarrage à froid des moteurs. Dans ce système connu, il est prévu un conduit de dérivation (« by-pass ») du circuit nominal d'évacuation des gaz d'échappement, ce conduit de dérivation pouvant être piloté par une vanne de manière à ce qu'en position de dérivation du conduit les gaz d'échappement viennent en contact thermique étroit avec le circuit de refroidissement de la culasse lors de la phase de démarrage du véhicule. L'air d'admission est ainsi chauffé, ce qui facilite le démarrage à froid du moteur. L'échange thermique augmenté entre les gaz d'échappement et l'eau de refroidissement, voire l'huile de lubrification, favorise également la montée en température du moteur et donc sa consommation. Lorsque le moteur est chaud et stabilisé, la vanne du conduit de dérivation est ramenée dans sa position de fonctionnement normal afin que les gaz d'échappement retrouvent le circuit d'évacuation classique vers l'extérieur du véhicule.

Comme dans le brevet américain précité, l'invention se propose d'intervenir sur le refroidissement des gaz d'échappement en fonction des phases de fonctionnement du moteur, en particulier la phase de démarrage à froid, ceci dans le cadre de moteurs comportant un collecteur de gaz d'échappement intégré à la culasse.

On rappelle que dans ce type d'architecture le liquide de refroidissement du moteur s'écoule dans un noyau de circulation du collecteur alimenté à travers une entrée communiquant avec le circuit de refroidissement de la culasse. Le collecteur d'échappement intégré est donc refroidi en même temps que la culasse puisque les circuits de refroidissement de la culasse et du collecteur intégré sont disposés en parallèle l'un de l'autre. Il en résulte qu'au démarrage du véhicule, la circulation de liquide de refroidissement autour du collecteur intégré des gaz d'échappement peut provoquer un abaissement trop important de la température des gaz d'échappement dans le circuit d'échappement et ainsi retarder l'amorçage du catalyseur de dépollution lorsque le véhicule est muni d'un tel dispositif.

Aussi, un but de l'invention est de proposer une architecture de collecteur de gaz d'échappement intégré à la culasse, qui permettrait de contrôler la circulation de liquide de refroidissement autour des gaz d'échappement collectés afin de répondre aux différentes situations de vie du moteur, et notamment de favoriser, dès la phase de démarrage à froid du véhicule, l'action du catalyseur de dépollution d'un véhicule qui en est équipé.

Ce but est atteint, conformément à l'invention, grâce à une architecture de collecteur de gaz d'échappement intégré à une culasse de moteur de véhicule automobile, ledit collecteur intégré comprenant un noyau de circulation de liquide de refroidissement alimenté par un circuit de refroidissement de la culasse ou du carter cylindre, remarquable en ce que ledit collecteur intégré comprend un actionneur apte à commander, c'est à dire bloquer ou libérer, l'écoulement du liquide de refroidissement dans ledit noyau de circulation.

Ainsi, l'architecture de collecteur intégré permet d'envisager deux modes de fonctionnement de l'actionneur.

Selon un premier mode de fonctionnement, ledit actionneur est apte à bloquer l'écoulement du liquide de refroidissement en phase de montée en température du moteur. Quand l'actionneur est en position de blocage, le fluide de refroidissement ne circule pas dans le noyau du collecteur intégré avec pour résultat d'éviter le refroidissement des gaz d'échappement et donc d'accélérer la vitesse d'amorçage du catalyseur de dépollution.

Par contre, dès que le catalyseur est amorcé, l'invention peut basculer dans un second mode de fonctionnement de l'actionneur dans lequel ledit actionneur est apte à libérer l'écoulement du liquide de refroidissement en phase de moteur à l'état chaud. Les gaz d'échappement sont alors refroidis de manière à assurer la tenue thermomécanique du moteur. Pour les moteurs à allumage commandé, ceci permet également de diminuer la richesse du mélange air-carburant à pleine charge, et donc la consommation de carburant.

L'invention présente bien d'autres avantages, en particulier par rapport au système connu de l'état de la technique cité.

En effet, l'architecture de collecteur intégré conforme à l'invention permet de conserver l'architecture classique d'un collecteur intégré, avec peu de modifications si ce n'est celle d'y inclure un actionneur pour piloter le noyau de circulation de fluide de refroidissement. Le système de collecteur intégré de l'invention est donc plus compact que celui du brevet américain précité qui nécessite des conduits de gaz d'échappement supplémentaires dans la culasse.

De plus, l'actionneur mis en oeuvre par l'invention peut être un actionneur passif, comme un thermostat, nettement moins coûteux et plus fiable qu'une une vanne par exemple.

On observera en outre que le système connu du brevet américain précité introduit une perte de charge sur les gaz d'échappement en phase de démarrage du moteur, ce qu'évite l'architecture de collecteur intégré, objet de l'invention.

A noter que le concept de collecteur intégré permet par ailleurs des gains en termes de montée en température pour le chauffage de l'habitacle.

Conformément à un mode de réalisation de l'invention, le noyau de circulation comprend une sortie débouchant dans le circuit de refroidissement du moteur à l'extérieur de ladite culasse.

Enfin, l'invention prévoit plusieurs configurations possibles pour l'implantation de l'actionneur dans lesquelles ledit actionneur est disposé en sortie ou en entrée du noyau de circulation du collecteur intégré, ou encore dans le noyau de circulation du collecteur intégré.

La description qui va suivre en regard du dessin annexé, donné à titre d'exemple non limitatif, fera bien comprendre quoi consiste l'invention et comment elle peut être réalisée.

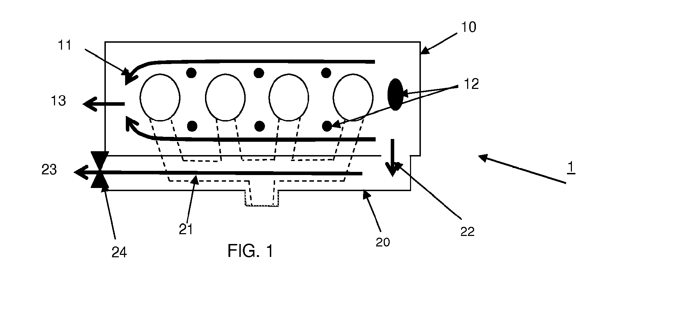

La figure 1 est une vue de dessus d'un moteur de véhicule automobile comprenant un collecteur de gaz d'échappement intégré à la culasse.

Sur la figure 1 est représenté un moteur 1 de véhicule automobile comprenant une culasse 10 et un collecteur 20 d'échappement intégré à la culasse 10.

La culasse 10 est alimentée en liquide de refroidissement, tel un mélange d'eau et de glycol par exemple, par des orifices 12 provenant de la pompe à eau ou du carter. Le liquide de refroidissement s'écoule dans la culasse 10 à travers un noyau 11 de circulation puis est recueillie en sortie 13 de la culasse pour être réinjectée et refroidie dans le circuit principal de refroidissement (non représenté) du moteur 1.

On peut voir sur la figure 1 que, conformément à l'architecture de collecteur d'échappement intégré à la culasse, qu'une partie du débit d'eau débouchant dans la culasse 10 par les orifices 12 pénètre dans le collecteur 20 par une entrée 22 permettant l'alimentation en eau du collecteur à partir du circuit dédié au refroidissement de la culasse 10 constitué par les orifices 12 et le noyau 11. L'eau de refroidissement circule dans le collecteur 20 le long d'un noyau 21 afin de refroidir les gaz d'échappement collectés, ceci dans le but d'assurer la tenue thermomécanique du moteur 1. Après avoir traversé le noyau 21 de circulation, l'eau de refroidissement est réintroduite au niveau de la sortie 23 du collecteur 20 directement dans le circuit principal de refroidissement du moteur 1, c'est-à-dire à l'extérieur de la culasse 10, sans passer par la sortie 13 de la culasse.

De manière à contrôler les échanges thermiques entre le liquide de refroidissement et les gaz d'échappement en fonction des situations de vie du moteur 1, un actionneur 24 de commande d'écoulement du fluide de refroidissement est disposé sur le noyau 21 de circulation du collecteur 20. En agissant sur l'actionneur 24, on peut donc bloquer ou, au contraire, libérer l'écoulement du liquide de refroidissement, ce qui permet de contrôler la température des gaz d'échappement en sortie du collecteur 20.

Ainsi, par exemple, en phase de montée en température du moteur 1, l'architecture de collecteur intégré de la figure 1 permet de bloquer l'écoulement de l'eau dans le noyau 21 du collecteur 20 afin de limiter le refroidissement des gaz d'échappement, et donc d'amorcer plus rapidement un catalyseur de dépollution placé dans le circuit d'échappement et diminuer les émissions polluantes.

Par contre, en phase de moteur 1 à l'état chaud, l'actionneur 24 est commandé de manière à libérer l'écoulement du liquide de refroidissement dans le noyau 21 et amener les gaz d'échappement à une température compatible avec la tenue thermomécanique du moteur 1.

Sur la figure 1, l'actionneur 24 est disposé en sortie 23 du noyau 21 de circulation. Il pourrait cependant être tout aussi bien disposé à l'entrée 22 du noyau 21 ou dans le noyau lui-même.

L'actionneur 24 peut être, de préférence, un organe passif, du type thermostat ou pressostat, ou un organe actif comme une vanne pilotée ou un thermostat piloté.

## Revendications

1. Architecture de collecteur (20) de gaz d'échappement intégré à une culasse (10) de moteur (1) de véhicule automobile, ledit collecteur intégré (20) comprenant un noyau (21) de circulation de liquide de refroidissement alimenté par un circuit (11, 12) de refroidissement de la culasse (10) ou du carter cylindre, **caractérisée en ce que** ledit collecteur intégré (20) comprend un actionneur (24) apte à commander l'écoulement du liquide de refroidissement dans ledit noyau (21) de circulation.

2. Architecture selon la revendication 1, dans laquelle ledit actionneur (24) est apte à bloquer l'écoulement du liquide de refroidissement en phase de montée en température du moteur (1).

3. Architecture selon la revendication 2, dans laquelle ledit actionneur (24) est apte à libérer l'écoulement du liquide de refroidissement en phase de moteur à l'état chaud. (1)

4. Architecture selon l'une quelconque des revendications 1 à 3, dans laquelle le noyau (21) de circulation comprend une sortie (23) débouchant dans le circuit (11, 12) de refroidissement du moteur (1) à l'extérieur de ladite culasse (10).

5. Architecture selon l'une quelconque des revendications 1 à 4, dans laquelle ledit actionneur (24) est disposé en sortie (23) du noyau (21) de circulation du collecteur intégré (20).

6. Architecture selon l'une quelconque des revendications 1 à 4, dans laquelle ledit actionneur (24) est disposé en entrée (22) du noyau (21) de circulation du collecteur intégré (20).

7. Architecture selon l'une quelconque des revendications 1 à 4, dans laquelle ledit actionneur (24) est disposé dans le noyau (21) de circulation du collecteur intégré (20).

8. Architecture selon l'une quelconque des revendications 1 à 7, dans laquelle ledit actionneur (24) est un organe passif.

9. Architecture selon l'une quelconque des revendications 1 à 7, dans laquelle ledit actionneur (24) est un organe actif.

10. Moteur comportant un collecteur d'échappement dont l'architecture est conforme à l'une quelconque des revendications 1 à 9.
